(19) Europäisches Patentamt
European Patent Office
Office européen des brevets

(11) Publication number: **0 030 677**
**B1**

(12) **EUROPEAN PATENT SPECIFICATION**

(45) Date of publication of patent specification: **17.10.84**

(51) Int. Cl.$^3$: **G 03 B 41/18**

(21) Application number: **80107552.4**

(22) Date of filing: **13.06.78**

(60) Publication number of the earlier application in accordance with Art. 76 EPC: **0 000 690**

# (54) Apparatus for receiving a stack of film sheets and dispensing one film sheet at a time.

(30) Priority: **13.06.77 US 805815**

(43) Date of publication of application: **24.06.81 Bulletin 81/25**

(45) Publication of the grant of the patent: **17.10.84 Bulletin 84/42**

(84) Designated Contracting States: **BE DE FR GB**

(56) References cited:
**FR-A-1 548 226**
**US-A-1 961 401**
**US-A-2 652 248**
**US-A-2 764 409**
**US-A-3 138 322**
**US-A-3 265 384**
**US-A-3 790 160**
**US-A-3 934 735**
**US-A-3 971 949**

(73) Proprietor: **E.I. DU PONT DE NEMOURS AND COMPANY**
**1007 Market Street**
**Wilmington Delaware 19898 (US)**

(72) Inventor: **Schmidt, Gunter**
**20645 Eagle Pass Drive**
**Malibu California 90265 (US)**

(74) Representative: **Abitz, Walter, Dr.-Ing. et al**
**Abitz, Morf, Gritschneder P.O. Box 86 01 09**
**D-8000 München 86 (DE)**

**EP 0 030 677 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an apparatus for receiving a stack of film sheets and dispensing one film sheet at a time. The apparatus comprises a housing wherein the stack of film sheets is held in a largely vertical plane, a roller at the lower end of said housing, an inclined support plate spaced slightly from the roller and a backing device pushing the film sheets against that roller.

An apparatus for receiving a stack of sheet-like articles and dispensing one article at a time is known in accordance with the prior art portion of claim 1 (US—A—3,138,322) in which the foremost article is initially engaged by the roller and pushed downwardly to a point where it is engaged by the rubber peripheral bands of a further feed roller and snapped into a slot. An apparatus of this kind is usable only for relatively thick, stiff, sheet-like articles. Film sheets, especially X-ray film sheets would be destroyed or would bend when pushed downwardly by a toothed roller.

The invention as claimed in claim 1 solves the problem of how to design an apparatus for receiving a stack of film sheets and dispensing one film sheet at a time which gently pushes the film sheets against the roller and assures reliable feeding of only one sheet at a time past the roller.

The claimed apparatus makes it possible to dispense film sheets into a radiophotographic unit under daylight conditions. A suitable radiophotographic unit is claimed in European Patent Application 78 100 141.7 (publication No. 0 000 690).

One way of carrying out the invention is described in detail below with reference to the drawings which illustrate one specific embodiment, in which:—

Figure 1 is a partial perspective view of a radiophotographic unit shown with a portion of the light tight housing cut away;

Figure 2 is an exploded perspective view of the dispenser portion of the unit of Figure 1, showing a film magazine outside of the receiver;

Figure 3 is an exploded perspective view of the film magazine of Figure 2;

Figure 4 is a view taken on the line 4—4 of Figure 2;

Figure 5 is a view taken on the line 5—5 of Figure 4;

Figure 6 is a partial view of the dispenser portion of Figure 4, showing it in a condition wherein a film is almost completely dispensed from the apparatus;

Figure 7 is a view taken on the line 7—7 of Figure 4;

Figure 8 is a view taken on the line 8—8 of Figure 7;

Figure 9 is a view taken on the line 9—9 of Figure 2;

Figure 10 is a view taken on the line 10—10 of Figure 9.

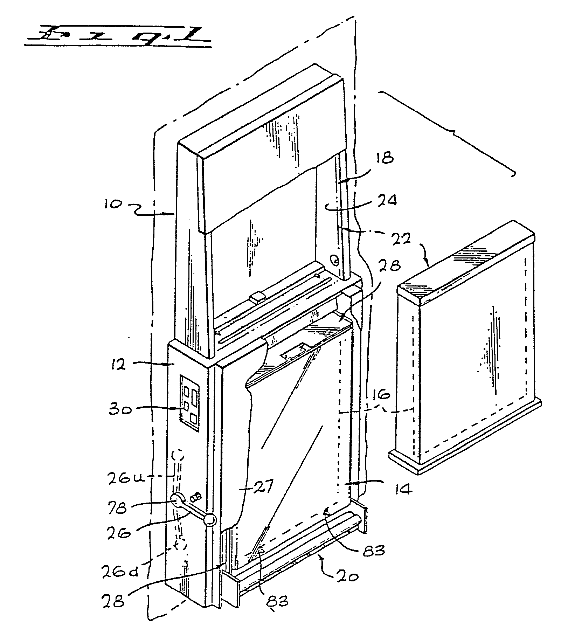

Fig. 1 illustrates a chest X-ray unit 10 which includes a main frame 12, an exposure apparatus 14 mounted along the frame for holding a sheet of film 16, a dispenser 18 above the exposure apparatus for dispensing the film into the exposure apparatus, and an exposed film receiver 20 located below the exposure apparatus for receiving the exposed film. The unit is prepared for operation by first loading a bulk film magazine 22 into a magazine-holding portion 24 of the dispenser. Then, a handle 26 on the main frame is pivoted to an upward position 26u to tip back a mounting frame 28 of the exposure apparatus 14 to a position for receiving a film from the dispenser, and a control on panel 30 is operated to cause the dispensing of a film into the exposure apparatus. After the film has been received, the handle 26 is moved into a downward position 26d which causes the film 16 to be held in the exposure apparatus closely against intensifier screens. A patient then can be positioned in front of a cover 27 on the exposure apparatus 14 and an exposure made. Finally, the handle is moved up to its central position 26 and the film 16 drops down into the receiver 20.

The exposure apparatus 14 is described in detail in the above-cited European patent application 78 100 141.7.

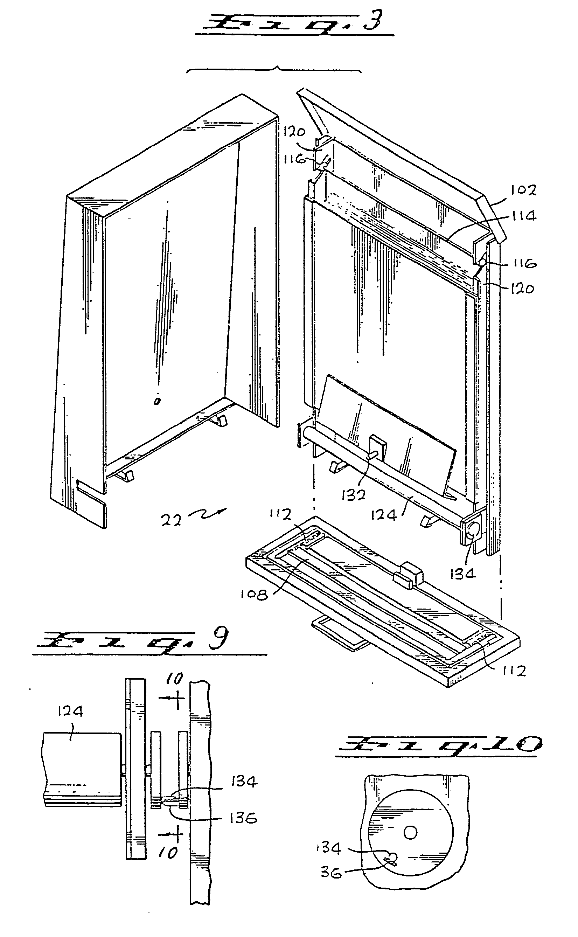

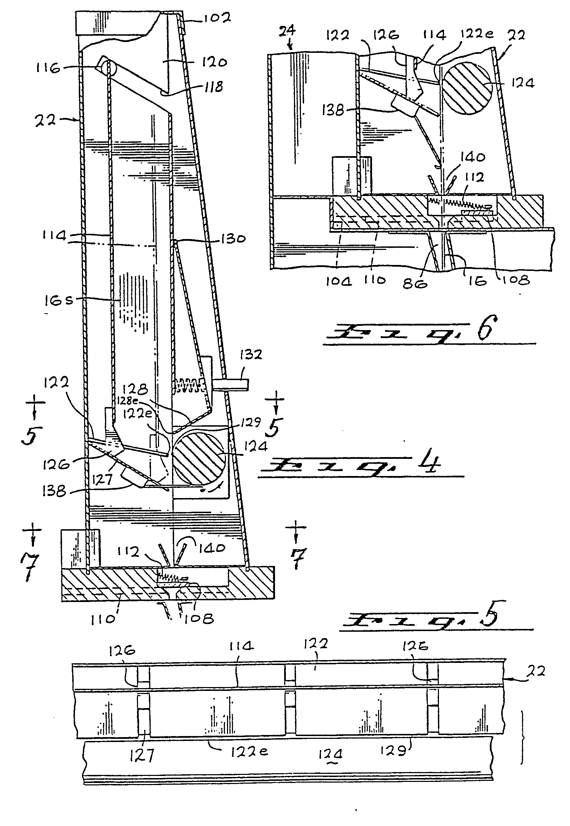

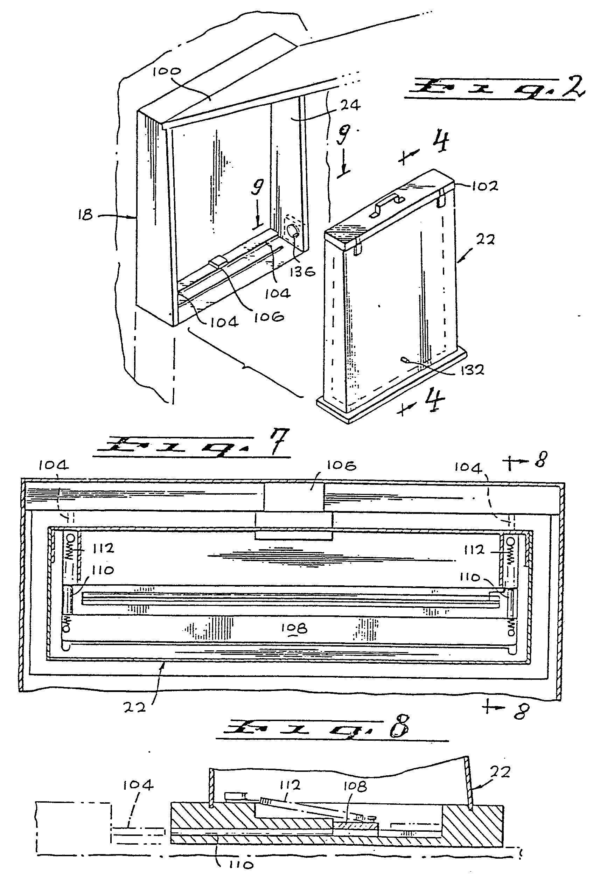

Figs. 2—8 illustrate the film dispenser 18 which dispenses one film at a time into the exposure apparatus. As shown in Fig. 2, the holding portion 24 of the dispenser has a cover 100 that can be swung open to receive the film-holding magazine 22. The film magazine 22 has a lid 102 at the top that can be opened to receive a stack of film sheets in a darkroom and which can then be closed to make the magazine light tight. As the magazine 22 is installed in the holding portion 24, it encounters a pair of pins 103 that open a light seal at the bottom and a receptacle 106 that receives a matting plug on the magazine. Fig. 4 illsutrates the light seal 108 at the bottom of the magazine 22, and shows the pair of rods 110 that are attached to the light seal. Fig. 6 illustrates the magazine 22 installed in the holder portion 24 of the dispenser, showing how the pins 104 on the holder depress the rods 110 to slide the light seal 108 against biasing of springs 112 so that a film sheet 16 can pass down through the dispenser.

As illustrated in Fig. 4, the magazine 22 includes a vertical pusher plate 114 whose upper end carries a pair of guides 116 that can move forwardly along downwardly inclined guideways 118 in a pair of guide plates 120. The pusher plate 114 is therefore urged by gravity to move forward, to push a stack of film 16s forwardly and down along an inclined upper support plate 122. As the film moves forward and down the support plate 122, the film nearest the roller is caught between a dispenser roller 124 and blocks 126 at the bottom of the pusher plate. The blocks 126, which are especially useful for pushing the last films of the stack into the roller, are constructed of low friction material such as a Delrin acetal resin and have fingers extending through slots in the upper support plate 122. The low friction material of the blocks 126 aids them in sliding down along a lower support plate 127 and in assuring that when the blocks push the last film against the drive roller 124 the blocks do not retard the film from moving down.

The forward edge 122e of the upper support plate 122 is accurately spaced from the drive roller 124 to form a throat 129 between them that permits only one sheet to pass down through the throat. Thus, for film sheets of 0.254 mm thickness, the edge 122e may be spaced a distance such as 0.305 mm from the roller. Also the edge 122e may be formed of a low friction material such as a Teflon® fluorocarbon resin to facilitate the passage of film thereby.

The magazine is normally loaded with film in a darkroom by laying the holding portion horizontally and then laying a stack of film on the pusher plate 114. When the holding portion is turned to the vertical as shown in Fig. 4, or is moved around, it is possible for more than one sheet to be pushed into the space above the support plate edge 122e and the roller 124. In order to avoid jamming of film, a backup member 128 is provided which can push the stack of film rearwardly, to push back sheets which have started to gather in and above throat space 129 and the roller. The backup member 128 is pivotally mounted at 130 and has a button 132 protruding from the film holder housing to enable a technician to press the button after he has loaded the magazine 22 in magazine 24. The backup member is also useful in that when its end 128e pushes back the stack and quickly releases it, the member bends the sheets and "shakes up" the stack. Any film sheets which have not fallen down firmly into the support plate 122 will do so, and the film sheets will lie in a more uniform arrangement for reliable dispensing.

When the film magazine 22 has been installed in the holding portion 24 of dispenser 18, a drive pin 134 (Fig. 9) at the end of the drive roller 124 lies in the path of a drive tab 136 which lies on a motor driven wheel. When a proper button on the control panel 30 of the unit is depressed, the roller 124 is rotated, as indicated in Fig. 4, to move down one film sheet past a microswitch 138, the thin arm of the microswitch deflecting out of the way of the film. The film then passes through a guideway 140 and through the guideway 86 into the exposure apparatus 14. Microswitch 138 is connected to a power source and to control panel 30 through receptacle 106.

The combination of the support plate edge 122e which is accurately spaced from the roller 124, the pusher plate 114 which holds the film upright and gently pushes it against the roller, and the backup member 128 which can push back and slightly bend the stack to help avoid sticking of the sheets to one another, all combine to assure regularity and evenness in the stack and therefore reliable feeding of only one sheet at a time past the roller. If a sheet is not fed, which is sensed by lack of operation of the microswitch 138, the technician can back up and slightly bend the stack once or twice, and again operate the roller to dispense a film sheet. Thus, by assuring that the sheets are well positioned in the magazine, uniform dispensing of the sheets is achieved.

## Claims

1. Apparatus for receiving a stack of film sheets (16) and dispensing one film sheet at a time, comprising:

a housing (22) having a region for holding a stack of film sheets wherein each film sheet extends in a largely vertical plane;

a roller (124) at the lower end of said housing (22);

an upper inclined support plate (122) spaced slightly from said roller (124) to normally allow only one film sheet at a time to pass by said roller (124), and

a backing device (114) disposed in said housing (22) with a lower end thereof on a side of said region opposite said roller (124), said backing device (114) being urged to move so that its lower end moves toward said roller (124) to push a film sheet (16) against said roller (124) characterized by

said backing device (114) including a low friction block (126) at the bottom thereof having fingers thereon, the fingers having a low friction forward portion which moves along an inclined lower support plate (127) close to said roller (124) to press a last film of a stack against said roller.

2. The apparatus described in claim 1 wherein:

said upper support plate (122) has slots therein; and

said fingers of said backing device (114) extend through said slots in said upper support plate (122).

3. The apparatus described in claim 1 including a backup member (128) movably mounted on said housing (22) and having a stack-engaging portion which can push against the stack of film (16s), from a side thereof opposite said backing device (114), to push the film sheets away from the roller (124).

4. The apparatus described in any one of claims 1 to 3, wherein the backup member (128) being movable quickly away from the stack, whereby to "shake up" the stack so that the film sheets (16) will lie in a more uniform manner.

## Patentansprüche

1. Vorrichtung zur Aufnahme eines Stapels von Filmblättern (16) und zur Ausgabe jeweils eines Filmblattes, mit:

einem Gehäuse (22) einem Bereich zum Halten eines Stapels von Filmblättern, wobei sich jedes Filmblatt in einer ungefähr vertikalen Ebene erstreckt;

eine Walze (124) am unteren Ende des Gehäuses (22);

einer oberen, geneigten Stützplatte (122), die einen geringen Abstand von der Walze (124) aufweist, um im Normalfall nur jeweils ein Filmblatt an der Walze (124) passieren zu lassen, und

eine Rückeinrichtung (114), die in dem Gehäuse mit ihrem unteren Ende auf einer der Walze (124) entgegengesetzten Seite des Bereichs angeordnet ist, wobei die Rückeinrichtung (114) veranlaßt wird, sich so zu bewegen, daß sich ihr unteres Ende zu der Walze (124) bewegt, um ein Filmblatt (16) gegen die Walze (124) zu drücken, dadurch gekennzeichnet,

daß die Rückeinrichtung (114) einen Block (126) niedriger Reibung an ihrem Boden aufweist, der Finger aufweist, die einen nach vorne gerichteten Teil niedriger Reibung aufweisen, der sich entlang einer geneigten unteren Stützplatte (127) in die Nähe der Walze (124) bewegt, um einen letzten Film des Stapels gegen die Walze zu drücken.

2. Vorrichtung nach Anspruch 1, wobei:

die obere Stützplatte (122) Schlitze aufweist und

sich die Finger der Rückeinrichtung (114) durch die Schlitze in der oberen Stützplatte (122) erstrecken.

3. Vorrichtung nach Anspruch 1, enthaltend ein Stützbauteil (128), das bewegbar an dem Gehäuse (22) befestigt ist und einen an dem Stapel angreifenden Bereich aufweist, der von einer der Rückeinrichtung (114) entgegengesetzten Seite gegen den Filmstapel (16s) drücken kann, um die Filmblätter von der Walze (124) wegzudrücken.

4. Vorrichtung nach einem der Ansprüche 1 bis 3, wobei das Stützteil (128) von dem Stapel schnell wegbewegbar ist, um dadurch den Stapel aufzustoßen, so daß die Filmblätter (16) gleichförmiger liegen.

## Revendications

1. Appareil pour la réception d'une pile de feuilles de film (16) et pour la distribution d'une feuille de film à la fois, comprenant:

— un boîtier (22) ayant une région pour maintenir une pile de feuilles de film dans laquelle chaque feuille de film est disposée dans un plan sensiblement vertical;

— un rouleau (124) à l'extrémité inférieure dudit boîtier (22);

— une plaque de support supérieure inclinée (122) écartée légèrement du rouleau (124) pour permettre normalement à une seule feuille de film à la fois de passer sur ledit rouleau (124); et

— un dispositif poussoir (114) disposé dans ledit boîtier (22) avec une extrémité inférieure sur un côté de ladite région opposé audit rouleau (124), ledit dispositif poussoir (114) étant sollicité pour se déplacer de façon que son extrémité inférieure se déplace vers ledit rouleau (124) pour pousser une feuille de film (16) contre ledit rouleau (124), caractérisé en ce que

— ledit dispositif poussoir (114) comprend à sa partie inférieure un bloc (126) en matériau à faible frottement portant des doigts, les doigts ayant une partie avant à faible frottement, qui se déplace le long d'une plaque de support inclinée inférieure (127), proche dudit rouleau (124) pour pousser un dernier film d'une pile contre ledit rouleau.

2. Appareil selon la revendication 1, dans lequel ladite plaque de support supérieure (122) a des fentes et les doigts dispositif poussoir (114) s'étendent à travers ces fentes dans ladite plaque support supérieure (122).

3. Appareil selon la revendication 1, comportant un organe de recul (128) monté mobile sur ledit boîtier (22) et ayant une partie venant en contact avec la pile, qui peut être poussée contre la pile de film (16s), sur un côté opposé à celui du dispositif poussoir (114), pour écarter les feuilles de film du rouleau (124).

4. Appareil selon une des revendications 1 à 3 dans lequel l'organe de recul (128) est mobile rapidement quand il s'écarte de la pile, permettant de secouer la pile de façon que les feuilles de film (16) restent d'une manière plus uniforme.

Fig. 1
10
12
30
26u
78
26
26d
28
18
24
22
28
16
27
14
83
20
83

Fig. 3
120
116
102
114
116
120
132
124
22
112
134
108
112
Fig. 9
10
124
134
136
10
Fig. 10
134
36

102
120
116
118
22
114
130
16s
132
122
128
128e
122e
129
5
5
124
126
127
138
Fig. 4
7
7
112
140
110
108
24
122
126
114
122e
22
124
138
140
112
104
110
86
16
108
Fig. 6
Fig. 5
126
114
122
126
22
127
122e
124
129

Fig. 2
100
24
9
9
4
102
18
22
136
104
104
106
132
4
Fig. 7
104
106
104
8
112
112
110
110
108
22
8
Fig. 8
22
104
112
108
110